# EUROPÄISCHE PATENTSCHRIFT

(11) **EP 1 917 493 B1**
(45) Veröffentlichungstag und Bekanntmachung des Hinweises auf die Patenterteilung: **19.08.2015**
(21) Anmeldenummer: 06742791.4
(22) Anmeldetag: 04.05.2006
(51) Int. Cl.: F28F 27/02, F28D 9/00, F16K 17/04

(54) **WÄRMETAUSCHER, INSBESONDERE ÖLKÜHLER FÜR EINE VERBRENNUNGSMASCHINE**
HEAT EXCHANGER, PARTICULARLY AN OIL COOLER FOR AN INTERNAL COMBUSTION ENGINE
ECHANGEUR DE CHALEUR, NOTAMMENT REFROIDISSEUR D'HUILE POUR UN MOTEUR A COMBUSTION INTERNE

(30) Priorität: 25.08.2005 DE 102005041036
(43) Veröffentlichungstag der Anmeldung: 07.05.2008
(73) Patentinhaber: Joma-Polytec GmbH, 72411 Bodelshausen (DE); Modine Manufacturing Company, Racine, Wisconsin 53403-2552 (US)
(72) Erfinder: PFITZER, Friedhelm, 72414 Rangendingen (DE); MAUTE, Alexander, 72379 Hechingen-Stetten (DE); JUNGMANN, Peter, 72406 Bisingen (DE); GLÜCK, Rainer, 72070 Tübingen (DE)
(74) Vertreter: DREISS Patentanwälte PartG mbB
(86) Internationale Anmeldenummer: PCT/EP2006/004163
(87) Internationale Veröffentlichungsnummer: WO 2007/022807

(56) Entgegenhaltungen:
- WO-A-01/46636
- DE-A1- 19 539 255
- FR-A- 2 853 725
- FR-A1- 2 680 544
- GB-A- 560 634
- US-A- 4 561 494
- US-A- 5 499 675
- US-A- 5 950 715

## Beschreibung

Die Erfindung betrifft einen Wärmetauscher, insbesondere einen Ölkühler für eine Verbrennungsmaschine mit einem Haupteinlasskanal und einen Hauptauslasskanal für einen Kühlmittelkreislauf und mit einem Haupteinlasskanal und einem Hauptauslasskanal für einen Kreislauf für ein zu kühlendes Mittel, wobei der jeweilige Haupteinlasskanal mit dem zugehörigen Hauptauslasskanal über Zu- und Abflüsse aufweisende, für den eigentlichen Wärmeaustausch vorgesehene Strömungskanäle verbunden sind, und wobei die Strömungskanäle des einen Kreislaufs von den Zu- und Abflüssen des jeweils anderen Kreislaufs durchbrochen sind.

Derartige Wärmetauscher sind beispielsweise aus der EP 0 653 043 B1 oder der EP 0 961 816 B1 vorbekannt.

In den von der zu kühlenden Flüssigkeit durchströmten Strömungskanälen, insbesondere, wenn die Strömungskanäle von Öl durchflossen sind, kann es zu Verunreinigungen und Ablagerungen kommen. Deshalb ist es wünschenswert, einen Wärmetauscher bereitzustellen, der selbst bei sich aufgrund von Verschmutzungen zusetzenden Strömungskanälen und einem daraus resultierenden höheren Strömungswiderstand funktionssicher arbeitet.

Aus der US 5,950,715 A und der WO 01/46636 A2 sind Wärmetauscher bekannt geworden, bei denen zur Umgehung von Strömungskanälen ein Umgehungskanal mit einem Überdruckventil vorgesehen sind. Das Überdruckventil weist dabei einen Ventilkörper mit einem den Eingang des Umgehungskanals verschließenden Verschlussabschnitt auf. Der Aufbau der Überdruckventile und der Wärmetauscher als solche sind vergleichsweise aufwändig.

Aufgabe der Erfindung ist es, einen Wärmetauscher bereit zu stellen, der den Nachteilen des Standes der Technik abhilft.

Diese Aufgabe wird durch einen Wärmetauscher mit den Merkmalen des Anspruchs 1 gelöst. Hierdurch wird vorteilhafterweise erreicht, dass bei zugesetzten Strömungskanälen eine Umgehung der Strömungskanäle durch den Umgehungskanal möglich ist. Durch einen erhöhten Strömungswiderstand in den Strömungskanälen steigt der Druck auf Seite der Zuflüsse. Bei Erreichen eines Grenzdrucks öffnet das Überdruckventil, wodurch die Strömungskanäle durch den Umgehungskanal umgangen werden können. Ein dem Wärmetauscher nachgeordnetes Aggregat wird folglich mit dem entsprechenden Mittel weiterhin versorgt.

Dadurch, dass der Umgehungskanal in die zugehörigen Abflüsse oder in den zugehörigen Hauptablasskanal mündet, ist kein zusätzlicher Anschluss am Wärmetauscher erforderlich. Der erfindungsgemäße Wärmetauscher kann folglich mit lediglich vier Anschlüssen auskommen, nämlich mit je einem Haupteinlasskanal und einem Hauptauslasskanal für zum einen des Kühlmittels und zum anderen des zu kühlenden Mittels.

Die Strömungskanäle sind durch aufeinander angeordnete Schalen gebildet und der Umgehungskanal und der Hauptauslasskanal sind von einer auf der letzten Schale angeordneten Abschlussschale gebildet. Die Abschlussschale verschließt folglich die letzte eigentliche Schale des Wärmetauschers und beinhaltet gleichzeitig den Umgehungskanal sowie den Hauptauslasskanal. Der Umgehungskanal mündet dabei vorteilhafterweise in den Hauptauslasskanal.

Die Abschlussschale weist eine die letzte Schale abdeckende Grundplatte mit einem Eingang des Umgehungskanals auf und der Umgehungskanal wird von der Grundplatte und einer auf der Grundplatte angeordneten Haube gebildet, die sich vom Eingang des Umgehungskanals bis zum Hauptauslasskanal erstreckt. Durch die zweiteilige Ausbildung der Abschlussschale wird zum einen eine sichere Abdichtung der letzten Schale erreicht und zum anderen der Umgehungskanal bereitgestellt.

Das Überdruckventil weist vorteilhafterweise einen Ventilkörper mit einem den Eingang des Umgehungskanals unter Vorspannung verschließenden Verschlussabschnitt und einen zur Erzeugung der Vorspannung an der Innenseite der Haube sich abstützenden Federarm auf. Hierdurch wird auf einfache Art und Weise ein funktionssicher arbeitendes Überdruckventil bereitgestellt.

Der Verschlussabschnitt weist vorteilhafterweise einen auf dem den Einlass umgebenden Bereich der Grundplatte aufliegenden und umlaufenden Rand auf. Hierdurch wird auf einfache Art und Weise eine effektive Abdichtung des Eingangs des Umgehungskanals erreicht. Zur Positionssicherung des Ventilkörpers im Umgehungskanal kann vorgesehen sein, dass der Verschlussabschnitt im Bereich innerhalb des umlaufenden Randes wenigstens geringfügig in den Eingang des Umgehungskanals ragt. Der Verschlussabschnitt weist dazu vorteilhafterweise Abschnitte auf, die in den Eingang des Umgehungskanals eingreifen. Ebenso können Befestigungsmittel am Ventilkörper und/oder an der Grundplatte und/oder der Kante vorgesehen sein. Insbesondere ist denkbar, dass der Federarm an der Haube befestigt ist.

Gemäß der Erfindung sind die Zuflüsse entlang einer Linie angeordnet, wobei der Eingang des Umgehungskanals im Wesentlichen in Verlängerung dieser Linie dem Haupteinlasskanal fernliegend angeordnet ist. Hierdurch kann das entsprechende Mittel in den Umgehungskanal gelangen, ohne dass es Strömungskanäle passieren muss. Die Linie, entlang der die Zuflüsse angeordnet sind, verläuft vorteilhafterweise senkrecht zur Hauptströmungsrichtung in den Strömungskanälen.

Gemäß der Erfindung sind die Abflüsse entlang einer Linie angeordnet sind und der Hauptauslasskanal ist im Wesentlichen in Verlängerung dieser Linie angeordnet. Die erwähnte Linie verläuft dabei vorteilhafterweise senkrecht zu der Hauptströmungsrichtung in den zugehörigen Strömungskanälen. Der Umgehungskanal kann dabei, wie bereits erwähnt, entweder in die entsprechenden Abflüsse oder auch vorteilhafterweise in den Hauptauslasskanal münden. Vorteilhafterweise ist das Überdruckventil im Bereich des Eingangs des Umgehungskanals angeordnet. Hierdurch wird erreicht, dass im Normalbetrieb des Wärmetauschers, bei dem das Überdruckventil geschlossen ist, das entsprechende Mittel von den Zuflüssen aus nicht in den Umgehungskanal fließen kann.

Gemäß der Erfindung erstreckt sich die Haube dabei über den Abfluss der letzten Schale, wobei axial über dem Abfluss der letzten Schale der Hauptablasskanal vorhanden ist.

Gemäß einer Weiterbildung der Erfindung ist vorteilhaft, wenn der Querschnitt des Umgehungskanals größer ist als der Querschnitt eines Strömungskanals und/oder in etwa dem Querschnitt des zugehörigen Haupteinlasskanals oder des zugehörigen Hauptauslasskanals entspricht. Hierdurch wird gewährleistet, dass der Strömungswiderstand, den der Umgehungskanal bildet, geringer ist als der Strömungswiderstand eines Strömungskanals.

Eine vorteilhafte und bauraumsparende Ausführung der Erfindung ergibt sich dann, wenn sich der Federarm des im Schnitt C-förmigen Ventilkörpers in dem Bereich der Haube abstützt, der axial über dem Eingang des Umgehungskanal liegt.

Dabei ist vorteilhaft, wenn der Ventilkörper einstückig aus einem Federstahl, insbesondere einem Federstahlblech, gebildet ist.

Bei einem erfindungsgemäßen Wärmetauscher, insbesondere bei einem Ölkühler, ist vorteilhaft, wenn der Umgehungskanal zur Umgehung der Strömungskanäle des Kreislaufs des zu kühlenden Mittels, also im Falle eines Ölkühlers des zu kühlenden Öls, vorgesehen ist. Sollten die Strömungskanäle aufgrund von Verschmutzungen im Öl einen zu großen Strömungswiderstand aufweisen, kann über das Umgehungsventil eine Kühlung des Öls umgangen werden.

Weitere Einzelheiten und vorteilhafte Ausgestaltungen der Erfindung sind der folgenden Beschreibung zu entnehmen, in der die Erfindung anhand des in der Zeichnung dargestellten Ausführungsbeispiels näher beschrieben und erläutert ist.

Es zeigen:
- Figur 1: eine perspektivische Ansicht von schräg oben auf einen erfindungsgemäßen Wärmetauscher;
- Figur 2: eine perspektivische Ansicht von schräg unten des Wärmetauschers gemäß Figur 1;
- Figur 3: einen Längsschnitt durch den Haupteinlasskanal und den Hauptauslasskanal des zu kühlenden Mittels;
- Figur 4: eine Vergrößerung des Ausschnitts IV in Figur 3; und
- Figur 5: eine perspektivische.Ansicht auf den Ventilkörper des Überdruckventils.

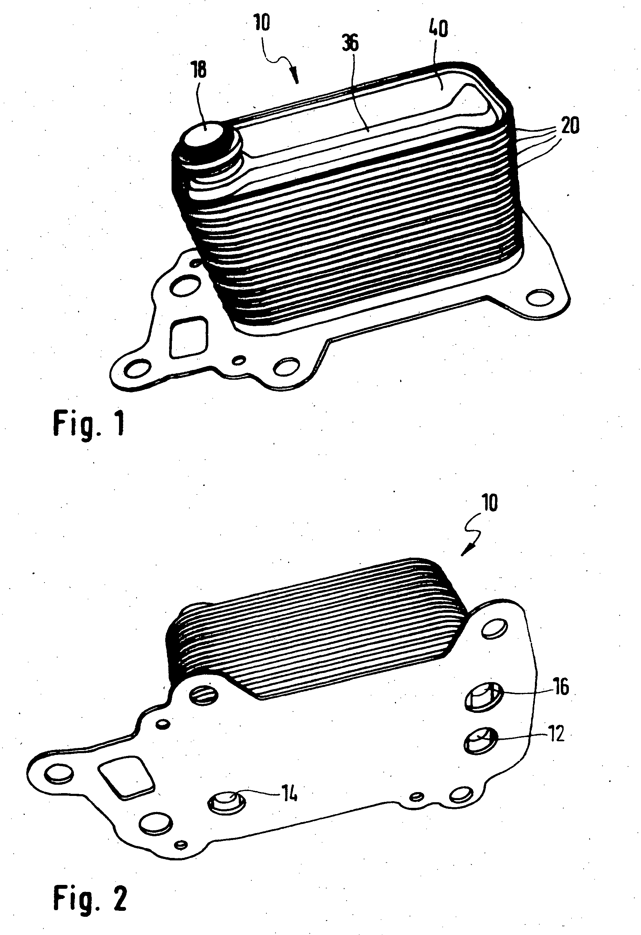

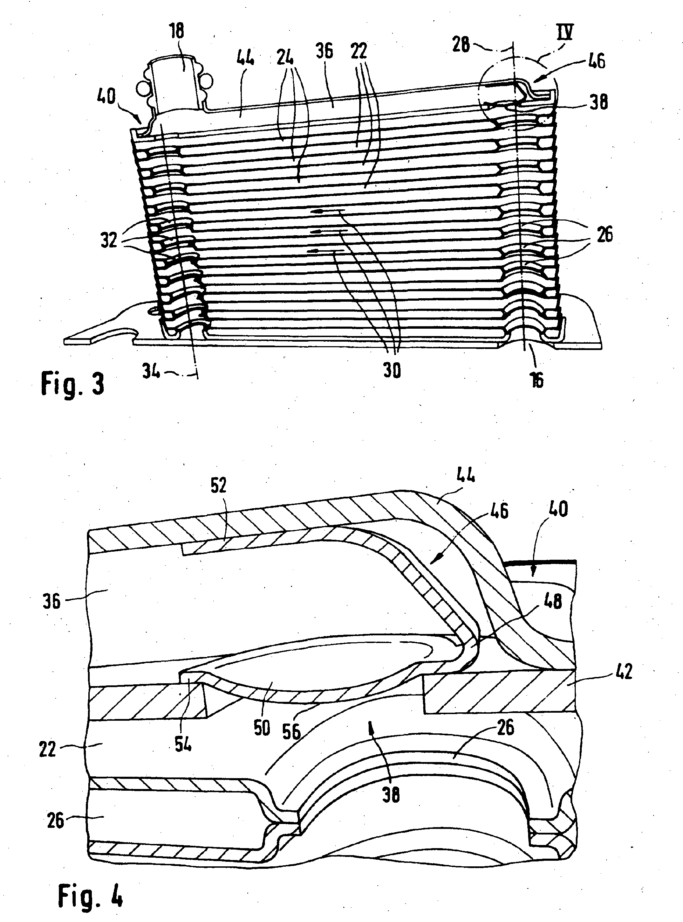

In den Figuren 1 bis 5 ist ein Wärmetauscher 10 in Form eines Ölkühlers dargestellt. Der Wärmetauscher umfasst einen Haupteinlasskanal 12 und einen Hauptauslasskanal 14 für einen Kühlmittelkreislauf sowie einen Haupteinlasskanal 16 und einen Hauptauslasskanal 18 für einen Kreislauf des zu kühlenden Mittels in Form von Öl. Der Wärmetauscher 10 besteht im Wesentlichen aus mehreren, aufeinander gestapelten Wärmetauscherschalen 20, die zum einen Strömungskanäle für das zu kühlende Öl und zum anderen Strömungskanäle für das Kühlmittel bilden. Im Schnitt gemäß Figur 3 sind die Strömungskanäle für das Öl mit dem Bezugszeichen 22 versehen und die Strömungskanäle für das Kühlmittel mit dem Bezugszeichen 24. Wie aus dem Schnitt gemäß Figur 3 ferner deutlich wird, weisen die Strömungskanäle 22 Zuflüsse 26 auf, durch welche das zu kühlende Öl vom Haupteinlasskanal 16 in die Strömungskanäle 22 gelangt. Die Zuflüsse 26 sind dabei entlang einer Linie 28 angeordnet, die im Wesentlichen senkrecht zu der Hauptströmungsrichtung 30 des Öls in den Strömungskanälen 22 verläuft. Die Strömungskanäle 22 münden in Abflüssen 32, die entlang einer Linie 34 übereinander angeordnet sind. Die Linie 34 verläuft dabei im Wesentlichen parallel zur Linie 28.

Die Strömungskanäle 24 des Kühlmittels weisen entsprechend den Strömungskanälen 22 des zu kühlenden Öls Zu- und Abflüsse auf, die im Schnitt gemäß Figur 3 nicht zu sehen sind. Die Zuflüsse beziehungsweise Abflüsse der Strömungskanäle 24 liegen dabei axial über dem Haupteinlasskanal 12 beziehungsweise dem Hauptauslasskanal 14 des Kühlmittels.

Um selbst bei zugesetzten Strömungskanälen 24 beziehungsweise bei zu großem Strömungswiderstand in den Strömungskanälen 24 dennoch einen Durchfluss von Öl vom Haupteinlasskanal 16 zum Hauptauslasskanal 18 gewährleisten zu können, weist der Wärmetauscher 10 zur Umgehung der Strömungskanäle 22 einen Umgehungskanal 36 auf. Der Umgehungskanal 36 weist einen Eingang 38 auf, der im Bereich der Zuflüsse 26 beziehungsweise auf der dem Haupteinlasskanal 16 fernliegenden Seite im Bereich der Linie 28 angeordnet ist.

Der Umgehungskanal 36 wird dabei von einer auf der letzten, beziehungsweise obersten Wärmetauscherschale angeordneten Abschlussschale 40 gebildet. Die Abschlussschale 40 weist dabei eine die letzte Schale abdeckende Grundplatte 42 mit einem Durchbruch als Eingang 38 auf sowie eine Haube 44 auf, die zusammen mit der Grundplatte 42 den Umgehungskanal 36 bildet. Der Hauptablasskanal 18 wird dabei ebenfalls von der Haube 44 gebildet.

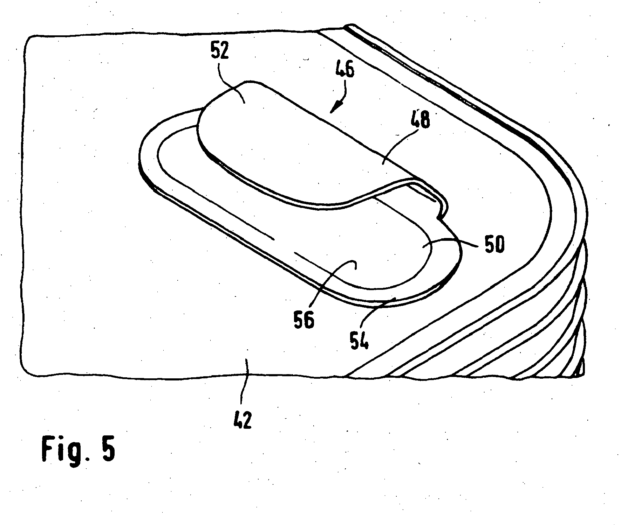

Wie insbesondere aus den Figuren 4 und 5 deutlich wird, wobei in der Figur 5 die Haube 44 nicht dargestellt ist, ist am Eingang 38 des Umgehungskanals 36 ein Überdruckventil 46 vorgesehen, das einen den Eingang 38 des Umgehungskanals 36 verschließenden Ventilkörper 48 aufweist. Der.Ventilkörper 48 umfasst dabei einen den Eingang 38 verschließenden Verschlussabschnitt 50 sowie einen sich an der Innenseite der Haube 44 abstützenden Federarm 52, der den Verschlussabschnitt 50 unter Vorspannung gegen den den Eingang 38 umgebenden Bereich der Grundplatte 42 beaufschlagt. Zur sicheren Anlage des Verschlussabschnitts 50 an der Grundplatte 42 weist der Verschlussabschnitt 50 einen umlaufenden Rand 54 auf. Zur Positionssicherung des Ventilkörpers 42 weist der Verschlussabschnitt 50 eine bauchartige, in den Eingang 38 ragende Krümmung 56 auf. Der Federarm 52 stützt sich dabei im Bereich der Haube 44 ab, die axial über dem Eingangsbereich 38 liegt. Die Vorspannung, mit der der Eingang 38 verschlossen wird, ist auf einen Grenzdruck abgestimmt, bei dem das Überdruckventil 46 öffnet. Bei geöffnetem Überdruckventil 46 strömt folglich das vom Haupteinlasskanal 16 kommende Öl zunächst durch die Zuflüsse 26, dann durch das Überdruckventil 46 in den Umgehungskanal 36. Der Querschnitt des Umgehungskanals 36 ist dabei wesentlich größer als der Querschnitt eines Strömungskanals 22 und entspricht in etwa der Querschnittsfläche des Haupteinlasskanals beziehungsweise des Hauptauslasskanals.

Der Ventilkörper 52 ist vorteilhafterweise einstückig aus Federstahl, und insbesondere aus einem entsprechend gebogenen Federstahlblech hergestellt.

Die einzelnen Wärmetauscherschalen 20 sowie die Abschlussschale 40 können aus Metall sein und sind insbesondere mittels Lötverbindungen miteinander verbunden. Entsprechend ist die Haube 44 auf die Grundplatte 42 aufgelötet.

## Patentansprüche

1. Wärmetauscher, (10) insbesondere Ölkühler für eine Verbrennungsmaschine,
mit einem Haupteinlasskanal (12) und einem Hauptauslasskanal (14) für einen Kühlmittelkreislauf und mit einem Haupteinlasskanal (16) und einem Hauptauslasskanal (18) für ein Kreislauf für ein zu kühlendes Mittel,
wobei der jeweilige Haupteinlasskanal (12, 16) mit dem zugehörigen Hauptauslasskanal über Zu- und Abflüsse (26 und 32) aufweisende, für den eigentlichen Wärmeaustausch vorgesehene Strömungskanäle (22; 24) verbunden sind, und wobei die Strömungskanäle (22; 24) des einen Kreislaufs von den Zu- und Abflüssen des jeweils anderen Kreislaufs durchbrochen sind,
wobei der Wärmetauscher (10) im Bereich der Zuflüsse (26) wenigstens eines Kreislaufs zur Umgehung der diesen Zuflüssen (26) nachgeordneten Strömungskanälen (22) einen Umgehungskanal (36) mit einem Überdruckventil (46) aufweist, wobei der Umgehungskanal (36) in die zugehörigen Abflüsse (32) oder in den zugehörigen Hauptauslasskanal (18) mündet,
wobei die Strömungskanäle (22, 24) durch aufeinander angeordnete Schalen (20) gebildet sind, und
wobei die Zuflüsse (26) entlang einer Linie (28) angeordnet sind und der Eingang (38) des Umgehungskanals (36) im Wesentlichen in Verlängerung dieser Linie (28) dem Haupteinlasskanal (16) fernliegend angeordnet ist, wobei die Abflüsse (32) entlang einer Linie (34) angeordnet sind und der Hauptauslasskanal (18) im Wesentlichen in Verlängerung dieser Linie (34) angeordnet ist, **dadurch gekennzeichnet,**
**dass** der Hauptauslasskanal (18) rohrartig ausgebildet ist,
**dass** der Umgehungskanal (36) und der Hauptauslasskanal (18) von einer auf der letzten Schale angeordneten Abschlussschale (40) gebildet sind,
**dass** die Abschlussschale (40) eine die letzte Schale abdeckende Grundplatte (42) mit einem Eingang (38) des Umgehungskanals (36) und eine Haube (44) aufweist, wobei der Umgehungskanal (36) von der Grundplatte (42) und der auf der Grundplatte (42) angeordneten Haube (44) gebildet wird,
**dass** sich die Haube vom Eingang (38) bis zum Hauptauslasskanal (18) und über den Abfluss (32) der letzten Schale erstreckt und dass axial über dem Abfluss (32) der letzten Schale der Hauptauslasskanal (18) vorgesehen ist.

2. Wärmetauscher (10) nach Anspruch 1, **dadurch gekennzeichnet, dass** das Überdruckventil (46) im Bereich des Eingangs (38) des Umgehungskanals (36) angeordnet ist.

3. Wärmetauscher (10) nach einem der vorhergehenden Ansprüche (18), **dadurch gekennzeichnet, dass** die Querschnittsfläche des Umgehungskanals (36) größer ist als die Querschnittsfläche eines Strömungskanals (22) und/oder in etwa der Querschnittsfläche des zugehörigen Haupteinlasskanals (16) oder des zugehörigen Hauptauslasskanals (18) entspricht.

4. Wärmetauscher (10) nach einem der vorhergehenden Ansprüche, **dadurch gekennzeichnet, dass** das Überdruckventil (46) einen Ventilkörper (48) mit einem den Eingang (38) des Umgehungskanals (36) unter Vorspannung verschließenden Verschlussabschnitt (50) aufweist.

5. Wärmetauscher (10) nach Anspruch 4, **dadurch gekennzeichnet, dass** der Ventilkörper (48) einen zur Erzeugung der Vorspannung an der Innenseite der Haube (44) sich abstützenden Federarm (52) aufweist.

6. Wärmetauscher (10) nach Anspruch 4 oder 5, **dadurch gekennzeichnet, dass** der Verschlussabschnitt (50) einen auf dem den Eingang (38) umgebenden Bereich der Grundplatte aufliegenden und umlaufenden Rand (54) aufweist.

7. Wärmetauscher (10) nach Anspruch 6, **dadurch gekennzeichnet, dass** der Verschlussabschnitt (50) im Bereich innerhalb des umlaufenden Randes (54) wenigstens geringfügig in den Eingang ragt.

8. Wärmetauscher (10) nach einem der Ansprüche 5 bis 7, **dadurch gekennzeichnet, dass** sich der Federarm (52) in dem Bereich der Haube (44) abstützt, der axial über dem Eingang (38) liegt.

9. Wärmetauscher (10) nach einem der Ansprüche 5 bis 8, **dadurch gekennzeichnet, dass** der Ventilkörper (46) einstückig aus Federstahl, insbesondere einem Federstahlblech, gebildet ist.

10. Wärmetauscher (10) nach einem der vorhergehenden Ansprüche, **dadurch gekennzeichnet, dass** der Umgehungskanal (36) zur Umgehung der Strömungskanäle (22) des Kreislaufs des zu kühlenden Mittels vorgesehen ist.

11. Wärmetauscher (10) nach einem der vorhergehenden Ansprüche, **dadurch gekennzeichnet, dass** die einzelnen Wärmetauscherschalen (20) sowie die Abschlussschale aus Metall sind und mittels Lötverbindungen miteinander verbunden sind, wobei die Haube (44) auf die Grundplatte (42) aufgelötet ist.

## Claims

1. A heat exchanger (10), in particular an oil cooler for an internal combustion engine,
having a main inflow conduit (12) and a main outflow conduit (14) for a coolant loop and
having a main inflow conduit (16) and a main outflow conduit (18) for a loop for a medium to be cooled,
the respective main inflow conduit (12, 16) communicating with the associated main outflow conduit via flow conduits (22; 24) that are provided for the actual heat exchange and that have inlets and outlets (26 and 32), and
the flow conduits (22; 24) of the one loop being penetrated by the inlets and outlets of the respectively other loop,
and the heat exchanger (10), in the vicinity of the inlets (26) of at least one loop for bypassing the flow conduits (22) downstream of these inlets (26), having a bypass conduit (36) with an overpressure valve (46), the bypass conduit (36) discharging into the associated outlets (32) or into the associated main outflow conduit (18),
and the flow conduits (22, 24) being formed by shells (20) disposed on one another, and
the inlets (26) being located along a line (28), and the entrance (38) to the bypass conduit (36) being located far away from the main inflow conduit (16) essentially in the extension of this line (28),
and the outlets (32) being located along a line (34) and the main outflow conduit (18) being located essentially in the extension of this line (34), **characterized in that** the main outflow conduit (18) is embodied in pipelike fashion;
that the bypass conduit (36) and the main outflow conduit (18) are formed by a closing shell (40) located on the last shell;
that the closing shell (40) has a base plate (42) covering the last shell and having an entrance (38) to the bypass conduit (36) and a hood (44),
the bypass conduit (36) being formed by the base plate (42) and the hood (44) being located on the base plate (42);
that the hood extends from the inlet (38) to the main outflow conduit (18) and via the outlet (32) of the last shell; and that the main outflow conduit (18) is provided axially above the outlet (32) of the last shell.

2. The heat exchanger (10) of claim 1, **characterized in that** the overpressure valve (46) is located in the vicinity of the entrance (38) to the bypass conduit (36).

3. The heat exchanger (10) of one of the foregoing claims, **characterized in that** the cross-sectional area of the bypass conduit (36) is greater than the cross-sectional area of a flow conduit (22) and/or is approximately equivalent to the cross-sectional area of the associated main inflow conduit (16) or the associated main outflow conduit (18).

4. The heat exchanger (10) of one of the foregoing claims, **characterized in that** the overpressure valve (46) has a valve body (48) with a closure portion (50) that in prestressed fashion closes the entrance (38) to the bypass conduit (36).

5. The heat exchanger (10) of claim 4, **characterized in that** the valve body (48) has a spring arm (52), braced on the inside of the hood (44), for generating the prestressing.

6. The heat exchanger (10) of claim 4 or 5, **characterized in that** the closure portion (50) has an encompassing rim (54) resting on it in the vicinity of the base plate surrounding the entrance (38).

7. The heat exchanger (10) of claim 6, **characterized in that** the closure portion (50) protrudes at least slightly into the entrance, in the vicinity inside the encompassing rim (54).

8. The heat exchanger (10) of one of claims 5 through 7, **characterized in that** the spring (52) is braced in the vicinity of the hood (44) that is located axially above the entrance (38).

9. The heat exchanger (10) of one of claims 5 through 8, **characterized in that** the valve body (46) is formed in one piece of spring steel, in particular of sheet spring steel.

10. The heat exchanger (10) of one of the foregoing claims, **characterized in that** the bypass conduit (36) is provided for bypassing the flow conduits (22) of the loop of the medium to be cooled.

11. The heat exchanger (10) of one of the foregoing claims, **characterized in that** the individual heat exchanger shells (20) and the closure shell are of metal and are joined together by means of soldered connections, the hood (44) being soldered onto the base plate (42).

## Revendications

1. Échangeur de chaleur (10), notamment refroidisseur d'huile pour un moteur à combustion interne,
ayant une conduite d'entrée principale (12) et une conduite de sortie principale (14) pour un circuit de fluide réfrigérant et ayant une conduite d'entrée principale (16) et une conduite de sortie principale (18) pour un circuit pour un fluide à refroidir,
dans lequel chaque conduite d'entrée principale (12, 16) est reliée avec la conduite de sortie principale correspondante par le biais de conduites de circulation (22; 24) prévues pour l'échange de chaleur effectif et présentant des admissions et des évacuations (26 et 32), les conduites de circulation (22; 24) d'un circuit étant respectivement traversées par les admissions et les évacuations de l'autre circuit,
dans lequel l'échangeur de chaleur (10) présente, dans la zone des admissions (26) d'au moins un circuit, une conduite de dérivation (36) ayant une soupape de surpression (46) pour contourner les conduites de circulation (22) placées en aval de ces admissions (26), la conduite de dérivation (36) débouchant dans les évacuations (32) correspondantes ou dans la conduite de sortie principale (18) correspondante,
dans lequel les conduites de circulation (22, 24) sont formées par des coupelles (20) agencées les unes sur les autres, les admissions (26) étant agencées le long d'une ligne (28) et l'entrée (38) de la conduite de dérivation (36) étant agencée essentiellement dans le prolongement de cette ligne (28) à distance de la conduite d'entrée principale (16),
dans lequel les évacuations (32) sont agencées le long d'une ligne (34) et la conduite de sortie principale (18) est agencée essentiellement dans le prolongement de cette ligne (34), **caractérisé**
**en ce que** la conduite de sortie principale (18) est réalisée de façon tubulaire,
**en ce que** la conduite de dérivation (36) et la conduite de sortie principale (18) sont formées par une coupelle de fermeture (40) agencée sur la dernière coupelle,
**en ce que** la coupelle de fermeture (40) présente une plaque de base (42) recouvrant la dernière coupelle avec une entrée (38) de la conduite de dérivation (36) et un capot (44),
la conduite de dérivation (36) étant formée par la plaque de base (42) et le capot (44) agencé sur la plaque de base (42),
**en ce que** le capot s'étend depuis l'entrée (38) jusqu'à la conduite de sortie principale (18), en passant par l'évacuation (32) de la dernière coupelle, et en ce que la conduite de sortie principale (18) est prévue axialement à travers l'évacuation (32) de la dernière coupelle.

2. Échangeur de chaleur (10) selon la revendication 1, **caractérisé en ce que** la soupape de surpression (46) est agencée dans la zone de l'entrée (38) de la conduite de dérivation (36).

3. Échangeur de chaleur (10) selon l'une des revendications précédentes, **caractérisé en ce que** la superficie de la section de la conduite de dérivation (36) est plus grande que la superficie de la section d'une conduite de circulation (22) et/ou correspond approximativement à la superficie de la section de la conduite d'entrée principale (16) correspondante ou de la conduite de sortie principale (18) correspondante.

4. Échangeur de chaleur (10) selon l'une des revendications précédentes, **caractérisé en ce que** la soupape de surpression (46) présente un corps de soupape (48) avec une section d'obturation (50) qui obture l'entrée (38) de la conduite de dérivation (36) sous une précontrainte.

5. Échangeur de chaleur (10) selon la revendication 4, **caractérisé en ce que** le corps de soupape (48) présente un bras de ressort (52) prenant appui sur le côté intérieur du capot (44) pour réaliser la précontrainte.

6. Échangeur de chaleur (10) selon la revendication 4 ou 5, **caractérisé en ce que** la section d'obturation (50) présente un bord (54) périphérique prenant appui sur la zone de la plaque de base entourant l'entrée (38).

7. Échangeur de chaleur (10) selon la revendication 6, **caractérisé en ce que** la section d'obturation (50) s'étend au moins légèrement dans l'entrée dans la section située à l'intérieur du bord périphérique (54).

8. Échangeur de chaleur (10) selon l'une des revendications 5 à 7, **caractérisé en ce que** le bras de ressort (52) prend appui dans la zone du capot (44) qui se situe axialement par-delà l'entrée (38).

9. Échangeur de chaleur (10) selon l'une des revendications 5 à 8, **caractérisé en ce que** le corps de soupape (46) est réalisé d'une seule pièce en acier à ressort, en particulier à partir d'une tôle d'acier à ressort.

10. Échangeur de chaleur (10) selon l'une des revendications précédentes, **caractérisé en ce que** la conduite de dérivation (36) est prévue pour contourner les conduites de circulation (22) du circuit du fluide à refroidir.

11. Échangeur de chaleur (10) selon l'une des revendications précédentes, **caractérisé en ce que** les coupelles individuelles (20) de l'échangeur de chaleur, ainsi que la coupelle de fermeture, sont en métal et sont reliées les unes avec les autres par le biais de connexions soudées, le capot (44) étant soudé sur la plaque de base (42).
